# EUROPÄISCHE PATENTSCHRIFT

(11) **EP 0 578 607 B1**
(45) Veröffentlichungstag und Bekanntmachung des Hinweises auf die Patenterteilung: **08.01.1997**
(21) Anmeldenummer: 93810403.1
(22) Anmeldetag: 03.06.1993
(51) Int. Cl.: B21C 29/00, B05B 7/08

(54) **Sprayanlage zum Kühlen von Profilen**
Spray apparatus for the cooling of profils
Dispositif de pulvérisation pour le refroidissement de profilés

(30) Priorität: 19.06.1992 CH 1947/92
(43) Veröffentlichungstag der Anmeldung: 12.01.1994
(73) Patentinhaber: Alusuisse Technology & Management AG, 8212 Neuhausen am Rheinfall (CH)
(72) Erfinder: Plata, Miroslaw, CH-1963 Vétroz (CH); Bourqui, Bernard, CH-3976 Noes (CH); Strehmel, Werner, CH-3960 Sierre (CH)

(56) Entgegenhaltungen:
- EP-A- 0 343 103
- EP-A- 0 429 394
- WO-A-92/02316
- DE-U- 8 810 085
- FR-A- 2 241 360
- FR-A- 2 256 790
- GB-A- 1 148 579

## Beschreibung

Die Erfindung bezieht sich auf eine "in-line" an eine Strangpresse anschliessende Sprayanlage zum allseitigen Kühlen von metallischen Profilen, insbesondere aus Aluminium oder aus einer Aluminiumlegierung, mit einem programmgesteuert aus Sprühdüsen austretenden, auf die Profile gerichteten Kühlmedium, wobei der Abstand, die Querschnittsverteilung und die Richtung der Sprühdüsen spezifisch an die geometrische Form und die Massenverteilung der Profile adaptierbar und die Sprühdüsen auf in Richtung des Profils verlaufenden Düsenleisten angeordnet sind. Weiter betrifft die Erfindung ein Verfahren zur Ermittlung der optimalen Einstellung der Sprühdüsen und ein Verfahren zum Betrieb einer Sprayanlage.

Eine derartige Sprayanlage ist z.B. aus der DE-U-8 810 085 bekannt.

Beim Kühlen von Strangpressprofilen, wobei rasches Kühlen auch Abschrecken genannt wird, bieten insbesondere grosse Profile mit unregelmässiger Form und Massenverteilung Probleme, weil die einzelnen Querschnittsbereiche eine ungleichmässige Wärmekapazität haben. Bei rascher abkühlenden dünnen und langsamer abkühlenden dicken Querschnittsbereichen entstehen Spannungen, welche zu erheblichen Verformungen und damit zu einer Nachbearbeitung oder gar Ausschuss führen können.

Von diesem Gesichtspunkt aus betrachtet erscheint eine langsame Abkühlung wünschbar, jedoch bilden sich hierbei grosse Körner aus. Dadurch wird das Profil zu weich und hat schlechte mechanische Eigenschaften. Bei einer Abschreckung wird die bestehende Struktur eingefroren, es entstehen mechanisch vorteilhafte kleine Körner. Die Abkühlungsgeschwindigkeit ist deshalb beim Strangpressen ein wichtiger Parameter und muss so optimiert werden, dass einerseits keine oder in der vorgegebenen Toleranz bleibende Deformationen auftreten, andererseits jedoch das Kornwachstum so begrenzt wird, dass hinreichende mechanische Eigenschaften erhalten bleiben.

Das Kühlen eines aus der Presse austretenden Strangspressprofils hängt nicht nur von der Menge, Wärmekapazität und dem Aufbringen des Kühlmediums ab, sondern wird durch die Durchlaufgeschwindigkeit des Profils beeinflusst. Ist diese Durchlaufgeschwindigkeit sehr niedrig, kann auch ein Kühlmedium mit niedriger Wärmekapazität wie Luft eingesetzt werden. Generell wirkt sich eine etwas zu langsame Kühlung eines Strangpressprofils weniger nachteilig aus als eine zu schnelle Kühlung; eine etwas geringere mechanische Festigkeit ist erträglicher als ein verbogenes Profil. Der Verwendung von Luft als Kühlmedium sind jedoch Grenzen gesetzt, weil die Produktivität des Strangpressens bei geringerer Durchlaufgeschwindigkeit entsprechend erniedrigt wird und die Luftkühlung nicht für alle Legierungszusammensetzungen angewendet werden kann. Luft ist also kein optimales Kühlmedium.

Beim Einsatz von Wasser in einem Badbehälter oder durch Aufspritzen ist dagegen die Abkühlung oft zu stark. Ein unregelmässiges Profil muss infolge ungleicher Abkühlung über den Querschnitt unter Anwendung sehr grosser Kräfte wieder gerade gereckt werden, was aufwendig und kostspielig ist. Dieser Vorgang muss oft mehrmals wiederholt werden.

Im Vergleich zu einem Luftstrom mit einer Kühlwirkung von etwa 100 bis 150 W/m².°C können in einem Wasserbad mit erzwungener Zirkulation Kühlwirkungen zwischen 20 und 50 kW/m².°C, mit einem Wasserstrahl sogar 20 bis 100 kW/m².°C erreicht werden. In einem Wasserbad werden jedoch trotz starker Zirkulation lokale Dampfblasen gebildet, wodurch die Kühlwirkung örtlich stark abgeschwächt und plastische Deformationen erzeugt werden. Mit einem Wasserstrahl kann dieses Problem entschärft, jedoch nicht vollständig verhindert werden.

Mit einer aufgesprühten Luft-Wassermischung können die erwähnten Probleme praktisch vollständig beseitigt werden. Der Einsatz einer optimalen Wassermenge erlaubt, dass die feinen Sprühtröpfchen vollständig verdampft werden können. Dabei wird ein Wärmeübergang bzw. eine Kühlwirkung von 0,5 bis 30 kW/m².°C erreicht. Die aufgesprühte Luft-Wasser-Mischung kann leicht in die hinterste Ecke oder in die kleinste Hinterschneidung auf der Oberfläche des Profils eindringen, ohne dass die Gefahr einer Dampfblasenbildung besteht. Das Kühlen mit einer aufgesprühten Luft-Wasser-Mischung kann für das Kühlen praktisch aller Legierungen mit mittlerer und geringer Geschwindigkeit zufriedenstellend angewendet werden.

In der EP-A-0 429 394 wird ein Verfahren und eine Vorrichtung zum Kühlen von gegossenen Strängen aus Aluminium nach einer Homogenisierungsglühung beschrieben. Dabei werden die mit einer ersten Temperatur kontinuierlich in Längsrichtung hintereinander aus einem Hochglühofen austretenden Stränge "in-line" mit einer programmgesteuerten Vorschubgeschwindigkeit und unter einer programmgesteuerten, allseitigen Besprühung mit einem Kühlmedium zum Erreichen einer einstellbaren Oberflächentemperatur durch eine Sprayanlage geführt. Die Innen- und Oberflächentemperatur der Stränge gleichen sich kurze Zeit nach dem Verlassen der Sprayanlage aus. Die Sprayanlage ist so konzipiert, dass sie über ihre ganze Länge und über den ganzen Umfang ihres Innenraums mit gesamthaft, gruppenweise oder einzeln einstellbaren Düsen für das Kühlmedium ausgerüstet ist. Diese Düsen sind bevorzugt nach der EP-A-0 343 103 ausgestaltet und erlauben eine pendelnde Bewegung des Sprühkegels, was eine gleichmässigere, flächendeckende Abkühlung bewirkt.

Die nach der EP-A-0 429 394 gekühlten Stränge haben stets eine regelmässige Querschnittsform, beispielsweise rechteckig, quadratisch oder rund. Die Düsenanordnung in der Sprayanlage ist entsprechend konzipiert. Die Kenntnisse und Erfahrungen der EP-A-0 429 394 beziehen sich auf regelmässig ausgebildete Stränge, z.B. in Form von rechteckigen, quadratischen oder runden Barren. Bei Profilen mit querschnittlich unregelmässiger Form und Massenverteilung ergaben sich die erwähnten Probleme, indem sich die Profile nach dem Austritt aus der Sprayanlage verbogen.

Eine Sprayanlage mit auf Düsenleisten angeordneten schwenkbaren Sprühdüsen ist grundsätzlich aus der DE-U-88 10 085 bekannt.

Angesichts dieser Gegebenheiten haben sich die Erfinder die Aufgabe gestellt, eine Sprayanlage der eingangs genannten Art, ein Verfahren zur Ermittlung der optimalen Einstellung der Sprühdüsen und ein Verfahren zum Betrieb der Sprayanlage zu schaffen, welche ein schnelles und problemloses Kühlen von allen Profiltypen, auch unregelmässigen und/oder grossen, ohne Verbiegungen und Verwindungen ausserhalb der Toleranzgrenze erlauben. Es sollen auch die beim Beginn des Strangpressens und durch einen Bolzenwechsel bedingten oder unerwarteten Unterbruch üblicherweise auftretenden starken Deformationen beherrscht werden.

In bezug auf die Vorrichtung wird die Aufgabe erfindungsgemäss dadurch gelöst, dass die Düsenleisten wenigstens einen längslaufenden Wasserkanal und zwei längslaufende Luftkanäle umfassen, wobei von den Wasserkanälen Stichkanäle zu den Sprühdüsen abzweigen und die Luftkanäle in auf die Düsenaustriebsöf fnungen gerichteten Luftspalten enden.

Bevorzugt sind die Düsenleisten aus stirnseitig aneinandergereihten Modulen aufgebaut oder durch Querwände so unterteilt, dass Module entstehen. Die Module sind separat mit den Kühlmedien, insbesondere Wasser und Luft, speisbar.

Bei einer bevorzugten Ausführungsform der Düsenleisten oder der Module weisen diese einen vorzugsweise stranggepressten Grundkörper auf, in welchen die Sprühdüsen auswechselbar eingesetzt und von einem querschnittlich etwa U-förmigen Deckblech gehalten sind. Dem Grundkörper sind Luftkammern bildende Abdeckungen mit einem auf die Düsenaustrittsöffnungen gerichteten Luftspalt aufgesetzt und die Luftkammern sind über Verbindungskanäle mit den Luftkanälen verbunden. Zur seitlichen Ablenkung des aus dem Luftspalt austretenden Luftstrahls sind am Deckblech zwischen den Luftspalten und den Düsenaustrittsöffnungen Ausformungen vorgesehen.

Die Anpassung von Abstand, Querschnittsverteilung und Richtung der Sprühdüsen erfolgt in einer dem Maschinenbauer bekannten Weise. Die Adaption mit mechanischen Mitteln zum parallelen Verschieben oder Schwenken
- erfolgt schnell und leicht, an eine grosse Anzahl von Profiltypen anpassbar, und
- umfasst auch die Führungs- und Aufhängesysteme der Profile.

Die Sprühanlage beinhaltet bevorzugt eine ebenfalls an sich bekannte Absauganlage für Dämpfe, einen Schutz gegen das Entweichen von Wasser in Richtung des Pressenausgangs, und benötigt nur minimale Unterhaltsarbeiten.

Mit der Einstellung der Parameter Abstand der Sprühdüsen vom der Profiloberfläche, Verteilung der Sprühdüsen und Richtung der Sprühdüsen kann erreicht werden, dass alle Oberflächenbereiche des durchlaufenden Strangpressprofils gleich schnell abgekühlt werden. Oberflächenbereiche mit mehr darunterliegender Masse sind stärker besprühbar, beispielsweise durch näher an der Profiloberfläche angeordnete Düsen oder sich überschneidende Sprühkegel. Querschnittsschwache Profilteile dagegen sollen nur schwach besprühbar sein, beispielsweise indem eine Düse in grösserer Distanz angeordnet wird und keine sich nennenswert überschneidenden Sprühkegel erzeugt werden.

Die auf in Richtung des Profils längslaufenden Düsenleisten angeordneten Sprühdüsen können mit den erwähnten, an sich bekannten Mitteln parallel verschoben und/oder in eine andere geometrische Lage geschwenkt werden, einzeln oder gruppenweise. Schliesslich können die Düsenleisten zur Veränderung der Sprührichtung der Düsen um die Längsachse gedreht werden. Selbstverständlich sind auch Ausführungsformen denkbar, in welchen die Düsen einzeln verstellt werden können, dies bedingt jedoch einen die Wirtschaftlichkeit des Strangpressens allenfalls beeinträchtigenden grossen Aufwand.

Düsenleisten oder Module mit zwei längslaufenden Wasserkanälen haben paarweise angeordnet Sprühdüsen für Wasser, jede mit einem Wasserkanal verbunden. Durch entsprechendes Einspeisen von Wasser in die Kanäle können die Wasserdüsen einzeln oder gemeinsam betätigt werden.

Die Düsenleisten können stufenweise oder kontinuierlich verschoben, in eine andere Lage geschwenkt oder um ihre Achse gedreht werden. Eine oder mehrere Düsenleisten, ob in Module unterteilt oder nicht, können auf einem Support angeordnet gesamthaft parallel verschoben oder geschwenkt werden, wobei die Achse in einer oder ausserhalb der Düsenleisten liegen kann. Daneben kann, wie bereits erwähnt, jede Düsenleiste einzeln um ihre eigende Längsachse gedreht werden.

Die Module können jede beliebige Anzahl von Düsen zwischen eins und der maximalen Anzahl von Düsen der Düsenleiste umfassen, vorzugsweise jedoch drei bis zehn Düsen in regelmässigem Abstand.

Die Art und Durchflussmenge von Kühlmedium pro Zeiteinheit durch die Düsenleisten und/oder die einzelnen Module ist in bekannter Weise einstellbar, beispielsweise mit Durchflussmessern. Der Begriff einstellbar umfasst auch das Ausschalten der Düsenleisten und/oder einzelnen Module.

Die einzelnen Sprühdüsen sind Wasserdüsen, bei welchen nach dem Prinzip der aus der EP-A-0 343 103 bekannten Luft-Wasser-Düsen die Mischung Wasser/Luft erst nach der Düsenöffnung eingestellt wird, was besonders vorteilhaft ist. Dieses speziell für das Kühlen von Strängen und Profilen konzipierte Prinzip erlaubet eine drastische Senkung des Kühlmediumbedarfs, was sich auf der Kostenseite günstig niederschlägt.

In bezug auf das Verfahren zur Ermittlung der optimalen Einstellung der Sprühdüsen wird die Aufgabe erfindungsgemäss dadurch gelöst, dass ein auf eine der Austrittstemperatur der Strangpresse entsprechende Temperatur erwärmtes Stück eines herzustellenden Profils mit verschiedenen Anordnungen der Sprühdüsen in bezug auf den Abstand vom Profil, die Verteilung und die Richtung der Sprühdüsen bei gleichem Luftund einstellbar unterschiedlichem Wasserdurchfluss gekühlt, der Temperaturverlauf an mehreren Punkten ausgemessen, die günstigste geometrische Anordnung beim erforderlichen Kühlmediendurchfluss ermittelt, mehrmals überprüft, und bei ungleicher Temperaturverteilung wenigstens eine Korrektur ermittelt wird.

Die Messung der Oberflächentemperatur des Profils an den erwähnten Orten wird bevorzugt während 1 bis 2 min fortgesetzt, insbesondere mit einer Frequenz von etwa 20 Messungen pro sec.

Bei diesen Temperaturmessungen ist von grundlegender Bedeutung, dass reproduzierbare Ergebnisse erhalten werden, welche möglichst den realen Bedingungen an der Strangpresse entsprechen. Bei einem Profil aus einer Aluminiumlegierung werden beispielsweise folgenden Massnahmen getroffen:
- Alle Kontakte des Thermoelements werden geprüft,
- das Profil wird mit 20%iger Ameisensäure gereinigt um alle Kalkspuren und anderen Ablagerungen zu entfernen, damit eine gleichmässige Oberflächenqualität erhalten wird,
- das Profil wird in einem Ofen während 2 mal 3 Stunden auf 530°C erwärmt und während etwa 30 Minuten auf dieser Temperatur gehalten, damit eine homogene Temperaturverteilung gewährleistet ist,
- vor dem Kühlen wird das System, von der Einspeisung bis zu den Modulen der Düsenleisten, mit Wasser gefüllt, um einen homogenen Start der über dem ganzen Profilumfang erfolgenden Kühlung zu gewährleisten,
- der Ofen wird raschmöglichst zurückgezogen, um einen bedeutenden Temperaturabfall vor dem Kühlen zu vermeiden,
- die Kühlung wird eingeschaltet und während dieser ganzen Phase, welche 1 bis 2 Minuten dauert, wird die Messung der Oberflächentemperatur des Profils aufgezeichnet, mit einer Kadenz von 20 Messungen pro Sekunde und Kanal,
- unmittelbar nach beendeter Kühlung werden alle Durchflüsse vom Kühlmedium registriert, was während der Temperaturmessung nicht erfolgt, um jede Störung der Durchflüsse zu vermeiden.

Falls die Abkühlung über den ganzen Profilumfang als nicht genügend gleichförmig beurteilt wird, werden nach programmierten Rechnungsmodellen die Wasserdurchflüsse angepasst, und wenn notwendig die geometrische Anordnung der Düsenleisten mit den Modulen in bezug auf Abstand, Verteilung und Sprühwinkel geändert. Ein Abstand von weniger als 100 mm wird jedoch vermieden, um den tatsächlichen Gegebenheiten an einer Strangpresse Rechnung zu tragen.

Zur Festlegung der Geometrie der Anordnung von Düsenleisten wird vorerst, um eine zu grosse Anzahl von Parametern zu vermeiden, mit einer Standarddurchflussmenge von Luft von 30 Nl/min je Düse, bei einem Druck von 2,5 bar, gearbeitet.

In bezug auf das Verfahren zum Betrieb einer Sprayanlage wird die Aufgabe erfindungsgemäss dadurch gelöst, dass die stranggepressten Profile mit nahezu der Solidustemperatur entsprechender Oberflächentemperatur, bei Aluminium und Aluminiumlegierungen mit 550 bis 580°C, in die Sprayanlage geführt und durch ein an die Form und die Massenverteilung der Profile adaptiert aufgesprühtes Kühlmedium programmgesteuert, mit oberhalb dem materialspezifischen kritischen Wert liegender Geschwindigkeit, abgekühlt werden.

Die nach dem beanspruchten Verfahren optimierte Anlage gewährleistet während des Strangpressens verbiegungs- und verwindungsfrei bleibende Profile, wenn entsprechend Geometrie und Massenverteilung rundum gleichmässig gekühlt wird, durch adaptiertes Auftragen des Kühlmediums.

Sind die aus der Strangpresse austretenden Profile schon verbogen und/oder verwunden, werden diese in bezug auf den Querschnitt computergesteuert unregelmässig abgekühlt, spezifisch an jede Querschnittsform adaptiert. Dadurch werden die Profile beim Abkühlen gerade gebogen und/oder von Verwindungen befreit. Der physikalische Effekt entspricht demjenigen, der beim Abkühlen von geraden Profilen Verbiegungen und/oder Verwindungen entstehen lässt. Wird pro Flächeneinheit mehr oder weniger Kühlmedium aufgetragen, als mit dem obenstehenden Verfahren zur rundum regelmässigen Abkühlung ermittelt wurde, kann das Profil wie erwähnt programmgesteuert geradegebogen bzw. von Verwindungen befreit werden. Die entsprechenden Programme werden im Prozessor der Anlage gespeichert.

In besonderem Masse eignet sich eine versprühte Luft-Wasser-Mischung als Kühlmedium. Dabei liegt die Abkühlgeschwindigkeit, auch bei der zusätzlichen Anordnung von alternierenden Wasserdüsen ohne benachbarte Luftspalte, immer oberhalb des materialspezifischen kritischen Werts. Bei besonders dünnen Profilteilen können die entsprechenden Sprühdüsen auch nur mit Luft gespeist werden.

Die Durchlaufgeschwindigkeit eines Profils durch die Sprayanlage liegt vorzugsweise bei 5 bis 50 m/min, insbesondere bei 10 bis 30 m/min. Diese Durchlaufgeschwindigkeit muss nicht nur optimale Kühlungsbedingungen zulassen, sondern, weil "in-line" mit dem Strangpressen durchgeführt, im selben Masse optimale Bedingungen des Strangpressens erfüllen, in technischer und wirtschaftlicher Hinsicht.

Das zu feinen Tröpfchen versprühte Wasser wird so dosiert, dass beim Beaufschlagen die Profiloberfläche durchgehend abgedeckt und anschliessend das Wasser vollständig verdampft wird. Die mit experimentellen Simulierungsmethoden berechnete Wassermenge wird in Funktion der Profilgeometrie, der Durchlaufgeschwindigkeit des Profils und der Anordnung der Spraydüsen dosiert, wobei die vorgegebene Abkühlungsgeschwindigkeit bestimmt wird durch
- das Verhindern mechanischer Deformationen bzw. das Glätten von deformierten Profilen,
- das Erzielen optimaler mechanischer Eigenschaften, und
- die Produktivität des gesamten Strangpressvorgangs.

Da eine Sprayanlage für grosse Profile 1000 oder mehr Sprühdüsen umfassen kann, werden bevorzugt Düsen eingesetzt, welche mit einem geringen Luft- und Wasserdurchfluss arbeiten, beispielsweise mit 10 bis 50 Nl/min, insbesondere 20 bis 40 Nl/min Luft und 0,2 bis 1 l/min Wasser pro Sprühdüse.

Das vorzugsweise vollständig computerisierte Verfahren der vorliegenden Erfindung erlaubt bei einem Unterbruch des Strangpressens, dass die Kühlmittelzufuhr kontinuierlich reduziert wird, beispielsweise während 30 bis 60 sec. Weiter erlaubt der bevorzugte Modulaufbau der Düsenleisten, dies ist von besonderer Bedeutung, dass die Module in Richtung des Profils beim Beginn und bei einem Unterbruch des Stranspressens entsprechend der Durchlaufgeschwindigkeit des Profils stufenweise ein- und ausgeschaltet werden können. Damit wird nicht nur die Menge von Kühlmedium reduziert, stillstehende Profile können gekühlt werden, wie wenn sie die ganze Kühlstrecke durchlaufen hätten. Dadurch muss z.B. beim Zusammenschweissen von Profilen an den Stirnseiten nur ein kurzes Stück abgeschnitten werden, was insbesondere bei komplizierten, teuren Profilen von Bedeutung ist.

Das hohe Adaptionsvermögen der Erfindung in bezug auf den Typ, den Abstand, die Verteilung und die Richtung der Sprühdüsen und die programmgesteuerte, individuelle Kühlmitteldosierung erlauben in bezug auf die metallurgischen Eigenschaften, die Deformationen und die Strangpressgeschwindigkeit bisher bei weitem nicht erzielbare Ergebnisse, insbesondere bei Profilen mit wenigstens einer der folgenden Eigenschaften
- mittlerer bis grosser Querschnitt,
- grosse ebene Flächen,
- starke Asymmetrien in bezug auf die Geometrie und/oder die Massenverteilung,
- schwierig zu kühlende Oberflächen,
wobei mit einer für jede Legierung spezifischen Kühlgeschwindigkeit gearbeitet werden kann.

Durch die Ermittlung der folgenden Parameter können die optimalen Kühlbedingungen rasch und wirksam festgelegt werden:
- Geometrische Position der Düsenleisten mit den Modulen rund um die Profile, bezüglich Distanz und Verteilung,
- Modulspezifische Dosierung des Sprühwassers,
- Winkel des Sprühkegels.

Die Erfindung wird anhand von in der Zeichnung dargestellten Ausführungsbeispielen, welche auch Gegenstand von abhängigen Patentansprüchen sind, näher erläutert. Es zeigen schematisch:
- - Fig. 1: eine Übersichtsdarstellung einer Strangpressanlage;
- - Fig. 2: eine Ansicht eines Moduls einer Düsenleiste von unten, mit sechs Sprühdüsen;
- - Fig. 3: eine Variante von Fig. 2 mit drei Sprühdüsen;
- - Fig. 4: einen Schnitt A-A gemäss Fig. 2;
- - Fig. 5: einen Axialschnitt durch eine Luft-Wasser-Sprühanordnung nach dem Stand der Technik;
- - Fig. 6: eine Draufsicht auf eine Sprühanordnung gemäss Fig. 5;
- - Fig. 7: die kritische Abschreckgeschwindigkeit einer Aluminiumlegierung;
- - Fig. 8: die Verteilung der Module zum Abkühlen eines runden Rohrs;
- - Fig. 9: die Anordnung von Thermoelementen zur Ermittlung der optimalen Einstellung der Sprühdüsen an einem asymmetrischen Grossprofil;
- - Fig. 10: eine Variante gemäss Fig. 9;
- - Fig. 11: die optimierte Anordnung von Modulen zum Abkühlen eines Profils gemäss Fig. 9;
- - Fig. 12: eine Startanordnung von Modulen zur Abkühlung eines Profils gemäss Fig. 10;
- - Fig. 13: die optimierte Anordnung gemäss Fig. 12, mit unterschiedlichen Kühlmedien.

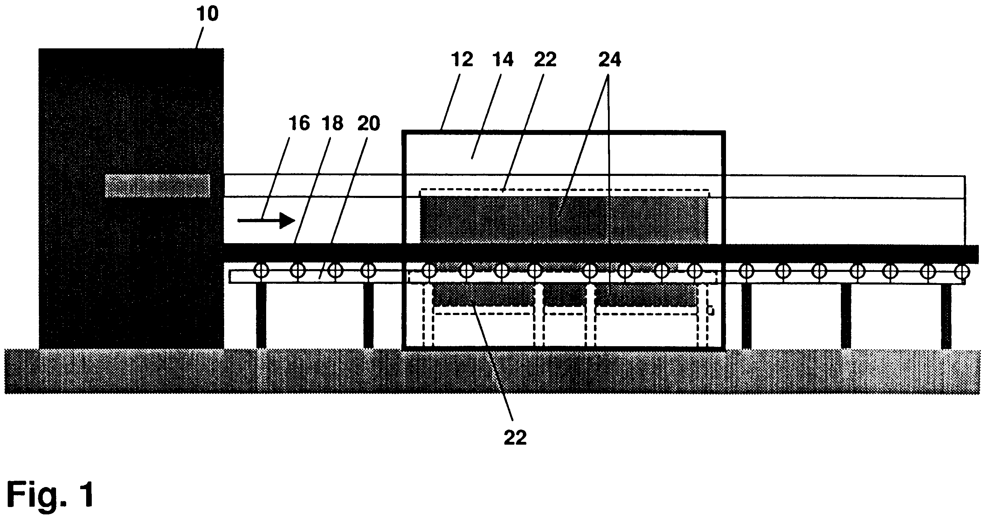

Die Uebersichtsdarstellung gemäss Fig. 1 zeigt als wesentliche Vorrichtungsteile eine Strangpresse 10 und eine in einem Gehäuse 12 angeordnete Sprayanlage 14. Aus der Strangpresse 10 fliesst in Richtung des Pfeils 16, der Durchlaufrichtung in der Sprayanlage 14, ein Profil 18 aus einer Aluminiumlegierung, welches mit einer Temperatur von etwa 575°C in die Sprayanlage 14 geführt wird. Das Profil 18 wird über einen Rollenförderer 20 gestossen.

In der Sprayanlage 14 tritt aus einer oberen und einer unteren Düsenleiste 22 eine Luft-Wasser-Mischung aus, welche in Form von sich überlappenden Sprühkegeln eine dünne Wasserschicht auf der Profiloberfläche bildet, wobei das Wasser unmittelbar nach dem Auftreffen vollständig verdampft.

Das Profil 18 liegt auch nach dem Abschrecken in der Sprayanlage 14 auf dem Rollenförderer 20 auf, es hat sich also nicht oder nicht merklich verbogen. Dies gilt nicht nur, wie dargestellt, in vertikaler, sondern auch in horizontaler Richtung.

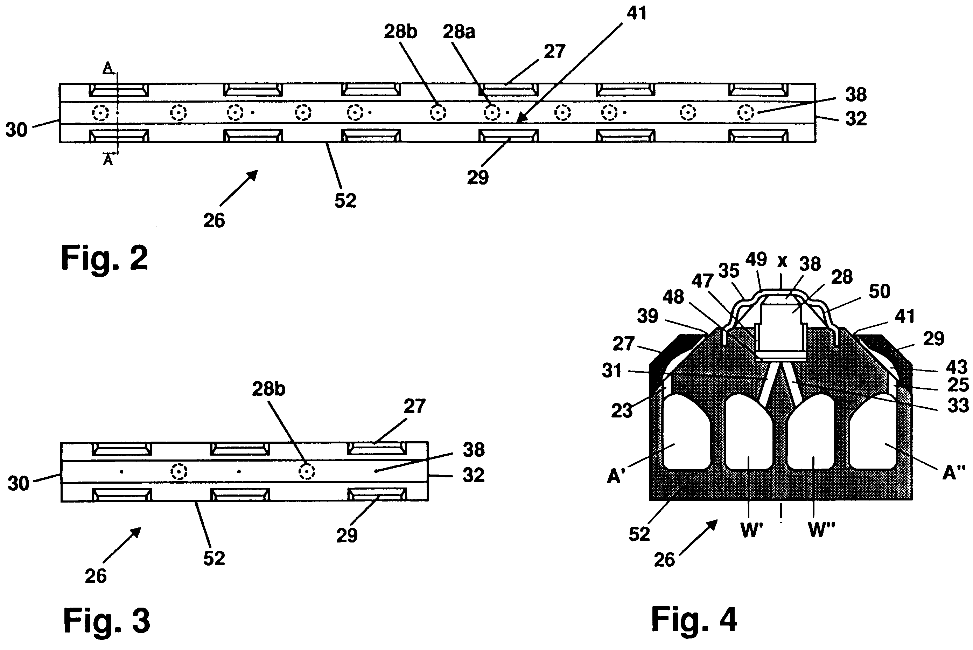

In den Fig. 2 und 3 werden Module 26 mit sechs und drei Sprühdüsen 28 gezeigt. Die von den Sprühdüsen 28 sichtbaren Düsenaustrittsöffnungen 38 sind in regelmässigen Abständen angeordnet, welche z.B. im Bereich von 5 bis 20 cm liegen. Benachbart der Düsenaustrittsöffnungen 38 sind beidseits Abdeckungen 27, 29 der Luftkammern sichtbar. Wahlweise sind zusätzliche Sprühdüsen 28a,b zwischen den Sprühdüsen 28 vorgesehen.

Mit ihren Stirnseiten 30, 32 direkt oder in Abstand bündig aneinander liegend bilden die Module 26 die unteren und oberen Düsenleisten 22 (Fig. 1) der Sprayanlage. Jedes Modul 26 ist separat mit wenigstens einem Kühlmedium, im vorliegenden Fall Luft und Wasser, speisbar. Der zu einem Modul 26 führende Mediendurchfluss kann kontinuierlich abgesenkt werden, bis der Zufluss im Grenzfall ganz abgestellt ist. Alle in bezug auf die Durchlaufrichtung 16 auf gleicher Höhe befindlichen Module 26 können auch kommunizierend gespeist werden, was einer zonenweisen Einstellung der Abkühlung entspricht.

Wie insbesondere aus Fig. 4 hervorgeht, weist das Modul 26 im peripheren Bereich je einen längslaufenden Luftkanal A',A'' und im zentralen Bereich zwei längslaufende Wasserkanäle W',W'' auf.

Die Luftkanäle A',A'' sind über Verbindungskanäle 23,25 mit Luftkammern 43,45 verbunden. Diese Luftkammern 43,45 werden durch am Grundkörper 52 angeschraubte Abdeckungen 27,29 gebildet. Zwischen der Abdeckung 27,29 und der um etwa 45° geneigten Fläche des Grundkörpers 52 ist ein auf die Düsenaustrittsöffnung 38 gerichteter Luftspalt 39,41 angeordnet.

Die Wasserkanäle W' ,W'' sind über Stichkanäle 31,33 mit den Düsen 28 verbunden. Die Düsen 28 sind hierbei in einer Rundnut 47 im Grundkörper 52 angeordnet. Die Dichtung erfolgt über einen in die Rundnut 47 eingesetzten O-Ring 48.

Ein in zwei Längsnuten 37 im Grundkörper 52 eingesetztes profiliertes Deckblech 35 etwa U-förmigen Querschnitts überspannt sämtliche Sprühdüsen 28 eines Moduls 26 und ist am Grundkörper 52 festgeschraubt. Hierbei werden die in eine entsprechende Rundnut 47 eingesetzten, leicht auswechselbaren und über den zwischenliegenden O-Ring 48 mit dem jeweiligen Stichkanal 31,33 in Verbindung stehenden Sprühdüsen 28 mit dem Grundkörper 52 in dichtende Anlage gebracht. Im Deckblech 35 sind den Düsenaustrittsöf fnungen 38 entsprechende Ausnehmungen 49 vorgesehen, so dass der aus der Düsenaustrittsöffnung 38 austretende Wasserstrahl ungehindert durch das Deckblech 35 hindurchtreten kann.

Zur teilweisen seitlichen Ablenkung des aus dem Luftspalt 39,41 austretenden Luftstrahls sind am Deckblech 35 zwischen Luftspalt 39,41 und Düsenachse X Erhebungen 50 von etwa halbkugeliger Gestalt ausgeformt. Durch diese Erhebungen 50 wird der Luftstrahl teilweise auf die zwischen den Sprühdüsen 28 gegebenenfalls vorgesehenen Sprühdüsen 28b gelenkt.

Die im zentralen Bereich des Moduls 26 ausgesparten längslaufenden Wasserkanäle W', W'' ermöglichen den Betrieb von Sprühdüsen mit verschieden dimensionierten Düsenaustrittsöffnungen 38. Der Wasserkanal W' ist über Stichkanäle 31 mit einer ersten Serie von Sprühdüsen 28 verbunden, welche beispielsweise eine Wassermenge von 0,8 l/min durchlassen. Der Wasserkanal W'' ist über Stichkanäle 33 mit zweiten Sprühdüsen 28a verbunden, welche beispielsweise eine Wassermenge von 0,4 l/min durchlassen. Die ersten Sprühdüsen 28 werden im Normalfall gespeist, bei einer Sparschaltung nur die zweiten Sprühdüsen 28a. Wird eine starke Kühlung benötigt, können die ersten und zweiten Sprühdüsen 28,28a gleichzeitig eingeschaltet oder auch noch die Sprühdüsen 28b zugeschaltet werden.

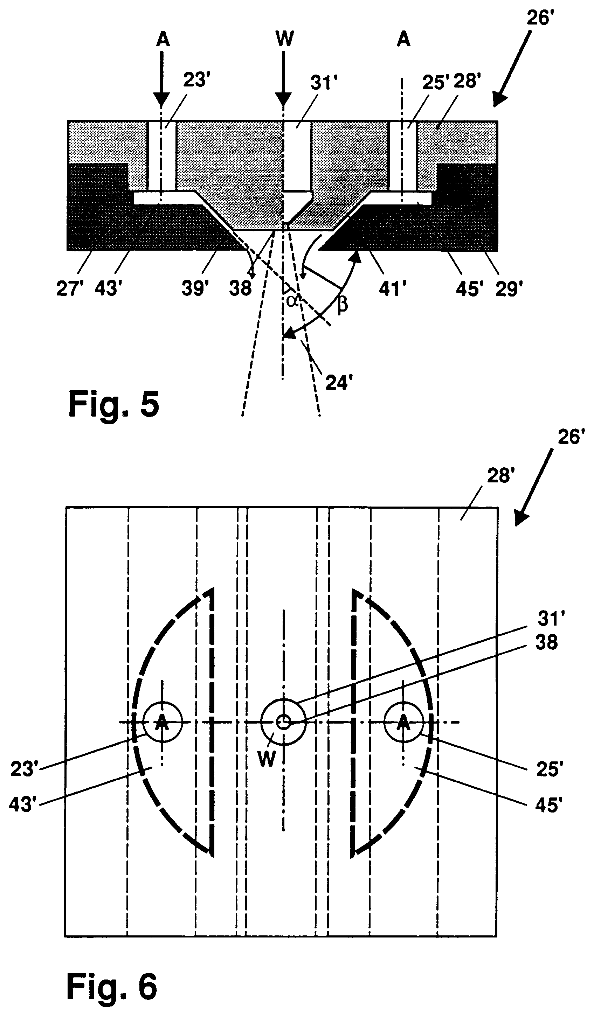

Der prinzipielle Aufbau und die Funktionsweise des Moduls 26 im Bereich einer der Sprühdüsen 28 mit benachbarten Luftkammern 43,45 ist nachfolgend anhand der Fig. 5 und 6 an der aus der EP-A-0 343 103 bekannten Luft-Wasser-Sprühanordnung näher erläutert.

Die Luft-Wasser-Sprühanordnung 26' besteht aus einem eine Wasserdüse bildenden Teil 28' mit einer sich in einem Winkel von 45° verengenden Zuflussleitung 31' für das Wasser W, welche eine Düsenöffnung 38' bildet, und zwei einander diametral gegenüberliegenden Bohrungen 23',25' für die Luftzufuhr A. Das Teil 28' ist unter Bildung von ringsegmentförmigen Hohlräumen 43',45' und daran anschliessenden Luftführungskanälen 39',41' in ein Gegenstück 27',29' eingepasst. Die Luftführungskanäle 39',41' schliessen mit der Düsenachse X einen Winkel α von 45° ein.

Durch unterschiedliche Druckluftbeaufschlagung der Bohrungen 23',25' kann die Richtung des kegelförmig verdüsten Kühlmediums, kurz Sprühkegel 24 genannt, in einem weiten Bereich, dem Winkel 2β, verändert werden. Durch kontinuierlich ändernde Druckluftbeaufschlagung der Luftführungskanäle 39',41' entsteht eine pendelartige Schwenkbewegung des Sprühkegels 24.

Mit einer Andordnung gemäss Fig. 5, 6 kann die Luftdurchflussmenge gegenüber einem Strahlmischverfahren auf der Grundlage einer Venturidüse um ein Mehrfaches gesenkt werden. Es hat sich zudem gezeigt, dass sich durch das Verdüsen des Wassers W und die Beschleunigung der Tröpfchen durch die eingeleitete Druckluft A eine über die Auftrefffläche des Flüssigkeitsnebels auf der Oberfläche des zu kühlenden Profils ausserordentlich gleichmässige Verteilung der Kühlintensität ergibt, wenn die pendelartige Schwenkbewegung des Sprühkegels 24 erfolgt.

Die Anordnung gemäss den Fig. 5 und 6 ist in der EP-A-0 343 103 näher erläutert. Der Sprühkegel 24 sowie seine mögliche Schwenkbewegung werden bei den Düsenleisten 22 oder Modulen 26 nach der Erfindung auf analoge Weise erzeugt, indem der Luftdruck in den Luftkanälen A',A'' separat eingestellt und variiert werden kann.

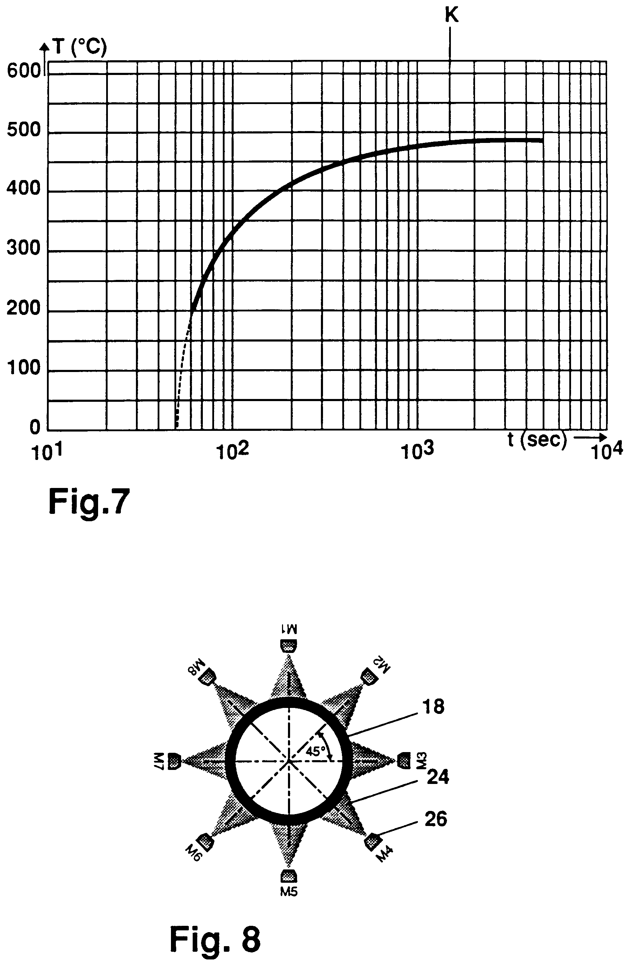

In Fig. 7 ist die kritische Abkühlgeschwindigkeit einer Aluminiumlegierung (Al Si1 Mg0,8 Mn0,3) einer Zugfestigkeit von 31 nbar mit der Kurve K dargestellt.

Hat das zu kühlende Strangpressprofil 18 (Fig. 1) am Eingang der Sprayanlage 14 eine mittlere Temperatur von etwa 580°C, so ist die interne Temperaturverteilung im Profil nicht einheitlich, es können lokale Differenzen bis etwa 50°C auftreten, welche während des Strangpressens im Rezipienten und am Pressenausgang entstehen. Das Abkühlen erfolgt ohne Unterbruch und ohne irgendwelches lokales Wiederaufwärmen des Profils. Die Abkühlungsgeschwindigkeit des Profils sollte immer grösser sein als der kritische Wert, welcher für jedes Profil bestimmt wird und für die angegebene Aluminiumlegierung in Fig. 7 mit der Kurve K dargestellt ist.

Zur Abkühlung eines runden Rohrprofils werden entsprechend Fig. 8 acht Module 26, welche mit M1 bis M8 bezeichnet sind, eingesetzt. Die Module 26 haben gemäss den Fig. 2 bis 4 angeordnete Sprühdüsen 28, welche sich geringfügig überlappende Sprühkegel 24 erzeugen.

Angesichts der regelmässigen Querschnittform des Profils 18 ist eine regelmässige räumliche Verteilung der Module 26 gegeben. Zu optimieren ist noch der Abstand der Module 26 vom Profil 18 und die Menge Kühlmedium.

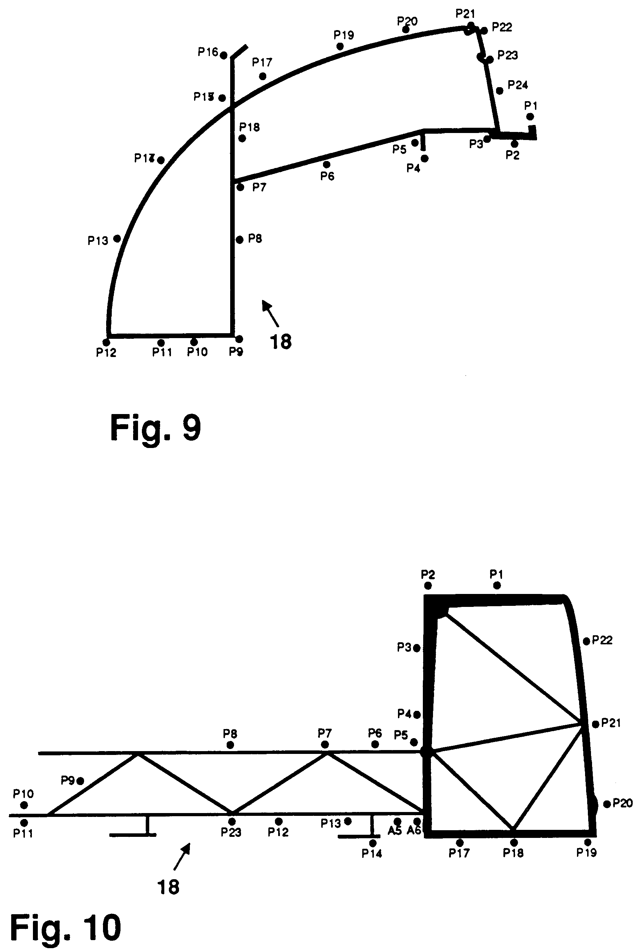

In den Fig. 9 und 10 sind in bezug auf die Form und Massenverteilung unregelmässige Grossprofile 18 dargestellt, welche dem Aufbau eines Wagenkastens für Schienenfahrzeuge dienen. An den Profiloberflächen werden Thermoelemente plaziert, welche mit P₁, P₂ .... P₂₃, P₂₄ bezeichnet sind. Damit können die notwendigen Temperaturmessungen zur Ermittlung der optimalen Einstellung der Sprühdüsen durchgeführt werden. Der Abstand und die Verteilung der Sprühdüsen sowie der Richtung der Sprühkegel werden optimalisiert, bis die Oberflächenabkühlung wiederholbar gleich ist. Offensichtlich muss Oberflächenbereichen mit mehr Masse mehr Kühlmedium zugeführt werden.

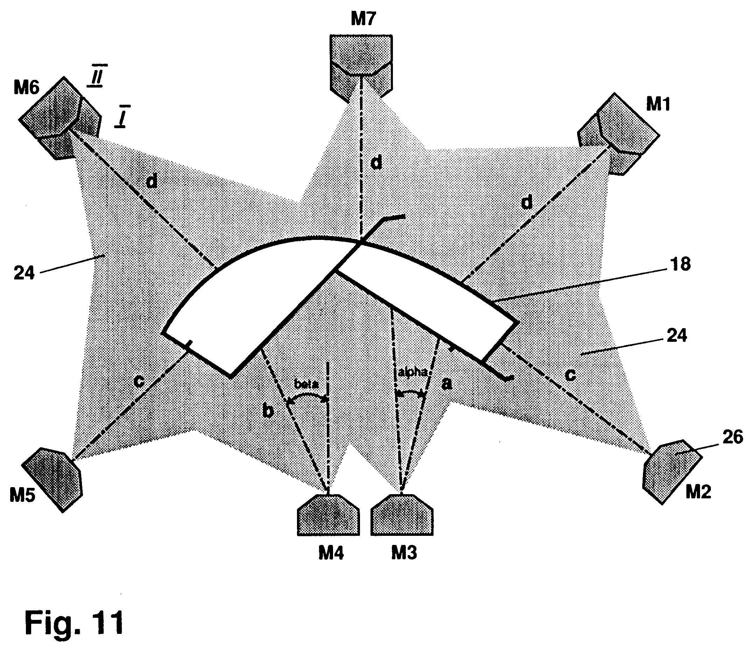

In Fig. 11 ist für ein Profil 18 gemäss Fig. 9 die Anordnung von sieben Modulen 26, mit M1 bis M7 bezeichnet, dargestellt. Position I zeigt die nicht optimierte, Position II die optimierte Stellung. Der rechnerische Optimierungsprozess hat ergeben, dass die Abstände a, b, c von je 170 mm der Düsen M2 bis M5 unverändert bleiben können, während die Abstände d der Sprühdüsen M1, M6 und M7 in der optimierten Position II um 20 mm auf 170 mm erhöht worden sind.

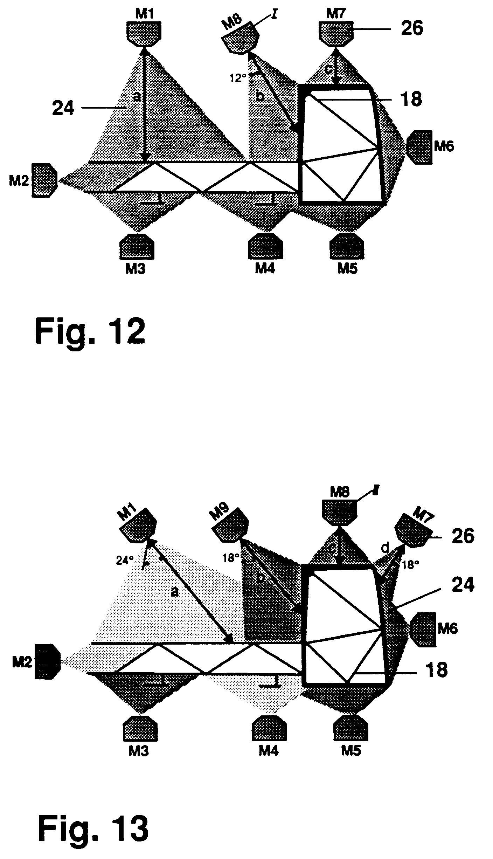

Fig. 12 zeigt die nicht optimierte, Fig. 13 die optimierte Anordnung von acht Modulen 26, mit M1 bis M8 bezeichnet, zum Abkühlen eines Profils 18 gemäss Fig. 10. In der nicht optimierten Konfiguration der Module 26 wird die Luft-Wasser-Mischung mit angenähert der Wandstärke des Profils 18 entsprechender Menge aufgesprüht. Die optimierte Konfiguration der Module 26 zur Erzeugung von Sprühkegeln 24 ist stark modifiziert, die Richtung der Sprühkegel 24 geändert. Schliesslich sind in den Bereichen des asymmetrischen Profils 18 mit geringerer Wandstärke drei Sprühdüsen (M1, M2, M4) angeordnet, welche ausschliesslich Luft führen und deshalb eine wesentlich geringere Kühlwirkung haben.

## Patentansprüche

1. "In-line" an eine Strangpresse (10) anschliessende Sprayanlage (14) zum allseitigen Kühlen von metallischen Profilen (18), insbesondere aus Aluminium oder aus einer Aluminiumlegierung, mit einem programmgesteuert aus Sprühdüsen (28) austretenden, auf die Profile (18) gerichteten Kühlmedium (W,A), wobei der Abstand (a,b,c,d), die Querschnittsverteilung und die Richtung (X) der Sprühdüsen (28) spezifisch an die geometrische Form und die Massenverteilung der Profile (18) adaptierbar und die Sprühdüsen (28) auf in Richtung (16) des Profils (18) verlaufenden Düsenleisten (22) angeordnet sind,
dadurch gekennzeichnet,
dass die Düsenleisten (22) wenigstens einen längslaufenden Wasserkanal (W',W'') und zwei längslaufende Luftkanäle (A',A'') umfassen, wobei von den Wasserkanälen (W',W'') Stichkanäle (31,33) zu den Sprühdüsen (28) abzweigen und die Luftkanäle (A',A'') in auf die Düsenaustrittsöffnungen (38) gerichteten Luftspalten (39,41) enden.

2. Sprayanlage nach Anspruch 1, dadurch gekennzeichnet, dass die Düsenleisten (22) in separat mit Kühlmedium (W,A) speisbare Module (26) unterteilt oder aus solchen Modulen (26) aufgebaut sind.

3. Sprayanlage nach Anspruch 1 oder 2, dadurch gekennzeichnet, dass die Düsenleisten (22) oder Module (26) einen vorzugsweise stranggepressten Grundkörper (52) aufweisen, in welchen die Sprühdüsen (28) auswechselbar eingesetzt sind.

4. Sprayanlage nach Anspruch 3, dadurch gekennzeichnet, dass die Sprühdüsen (28) von einem querschnittlich etwa U-förmigen Deckblech (35) gehalten sind.

5. Sprayanlage nach einem der Ansprüche 1 bis 4, dadurch gekennzeichnet, dass dem Grundkörper (52) Luftkammern (43,45) bildende Abdeckungen (27,29) mit einem auf die Düsenaustrittsöffnung (38) gerichteten Luftspalt (39,41) aufgesetzt sind und die Luftkammern (43,45) über Verbindungskanäle (23,25) mit den Luftkanälen (A',A'') verbunden sind.

6. Sprayanlage nach den Ansprüchen 4 und 5, dadurch gekennzeichnet, dass das Deckblech (35) zwischen den Luftspalten (39,41) und den Düsenaustrittsöffnungen (38) Ausformungen (50) zur teilweisen seitlichen Ablenkung des aus den Luftspalten (39,41) austretenden Luftstrahls aufweist.

7. Sprayanlage nach einem der Ansprüche 1 bis 6, dadurch gekennzeichnet, dass die Module (26) einer Sprayanlage (14) die gleiche Anzahl von Sprühdüsen (28) speisen, vorzugsweise drei bis zehn.

8. Sprayanlage nach einem der Ansprüche 1 bis 7, dadurch gekennzeichnet, dass Düsenleisten (22), Module (26) und/oder einzelne Sprühdüsen (28) Mittel zur Adaption an ein Profil (18) durch Parallelverschieben und/oder Schwenken um wengistens eine parallel zur Richtung des Profils (18) verlaufende Achse umfassen.

9. Sprayanlage nach einem der Ansprüche 1 bis 8, dadurch gekennzeichnet, dass Mittel zum Einstellen der Durchflussmenge von Kühlmedium (W,A) pro Zeiteinheit durch die längslaufenden Kanäle (A',A'',W',W'') der Düsenleisten (22) und/oder der einzelnen Module (26) angeordnet sind, das vollständige Ausschalten eingeschlossen.

10. Verfahren zur Ermittlung der optimalen Einstellung der Sprühdüsen (28) in einer Sprayanlage (14) nach einem der Ansprüche 1 bis 9, dadurch gekennzeichnet, dass ein auf eine der Austrittstemperatur der Strangpresse (10) entsprechende Temperatur erwärmtes Stück eines herzustellenden Profils (18) mit verschiedenen Anordnungen der Sprühdüsen (28) und/oder Module (26) in bezug auf den Abstand vom Profil (18), die Verteilung und die Richtung (X) der Sprühdüsen (28) bei gleichem Luft- und einstellbar unterschiedlichem Wasserdurchfluss gekühlt, der Temperaturverlauf an mehreren Punkten (P1 -P24) gemessen, die günstigste geometrische Anordnung beim erforderlichen Kühlmediendurchfluss ermittelt, mehrmals überprüft und bei ungleicher Temperaturverteilung wenigstens einmal eine Korrektur ermittelt wird.

11. Verfahren nach Anspruch 10, dadurch gekennzeichnet, dass die Messung der Oberflächentemperatur des Profils (18) während 1 - 2 min fortgesetzt wird, vorzugsweise mit einer Frequenz von etwa 20 Messungen/sec.

12. Verfahren zum Betrieb einer Sprayanlage nach einem der Ansprüche 1 bis 9, dadurch gekennzeichnet, dass die stranggepressten Profile (18) mit nahezu der Solidustemperatur entsprechender Oberflächentemperatur, bei Aluminium und Aluminiumlegierungen mit 550 bis 580°C, in die Sprayanlage (14) geführt und durch ein an die Form und die Massenverteilung der Profile (18) adaptiert aufgesprühtes Kühlmedium (W,A) programmgesteuert, mit oberhalb dem materialspezifischen kritischen Wert (K) liegender Geschwindigkeit, abgekühlt werden.

13. Verfahren nach Anspruch 12, dadurch gekennzeichnet, dass gerade aus der Strangpresse (10) austretende Profile (18) rundum gleichmässig mit dem Kühlmedium (W,A) besprayt werden.

14. Verfahren nach Anspruch 12, dadurch gekennzeichnet, dass verbogene und/oder verwunden aus der Strangpresse (10) austretende Profile (18) in bezug auf den Querschnitt profilspezifisch unregelmässig abgekühlt werden.

15. Verfahren nach einem der Ansprüche 12 bis 14, dadurch gekennzeichnet, dass das Profil (18) bei einer Durchlaufgeschwindigkeit von 5 bis 50 m/min, vorzugsweise 10 bis 30 m/min, abgekühlt wird, bei einer bevorzugten Kühlmedienmenge von 10 bis 50 Nl/min Luft und einer vollständig verdampfenden Wassermenge, insbesondere bei 20 bis 40 Nl/min Luft und 0,2 bis 1 l/min Wasser, jeweils pro Sprühdüse (28).

16. Verfahren nach einem der Ansprüche 12 bis 15, dadurch gekennzeichnet, dass bei einem Unterbruch des Strangpressens die Kühlmedienzufuhr, kontinuierlich reduziert wird, vorzugsweise während 30 bis 60 sec, bis zum Abstellen.

17. Verfahren nach einem der Ansprüche 12 bis 16, dadurch gekennzeichnet, dass die Module (26) in Richtung des Profils (18) beim Beginn und beim Unterbruch des Strangpressens, entsprechend der Durchlaufgeschwindigkeit, stufenweise ein- und ausgeschaltet werden.

18. Verfahren nach einem der Ansprüche 12 bis 17, dadurch gekennzeichnet, dass die Sprührichtung (X) und der Sprühkegel (24) des Kühlmediums der Sprühdüsen (28) durch prozesskontrollierte Aenderung der durch zwei Luftspalten (39,41) austretende und auf die Düsenaustrittsöffnungen gerichtete Luft (A) gesteuert werden, wodurch mittels einer pendelartigen Schwenkbewegung des Sprühkegels (24) in einem Winkel (β) senkrecht zur Vorschubrichtung (16) der Profile (18) ein besser ausgeglichener Wärmefluss entsteht.

19. Verfahren nach einem der Ansprüche 12 bis 18, dadurch gekennzeichnet, dass zwei nebeneinander angeordnete, aus verschiedenen längslaufenden Wasserkanälen (W', W'') gespeiste Sprühdüsen (28), einzeln oder gemeinsam eingeschaltet werden, vorzugsweise mit einem Durchfluss von 0,4, 0,8 oder 1,2 l/min versprühtem Wasser.

## Claims

1. Spraying plant (14) connecting "in-line" to an extruder (10) for all-over cooling of metallic profiles (18), particularly made from aluminium or from an aluminium alloy, having a programme-controlled cooling medium (W, A) emerging from spraying nozzles (28) and directed onto the profiles (18), wherein the distance (a, b, c, d), the cross-sectional distribution and the direction (X) of the spraying nozzles (28) can be specifically adapted to the geometrical shape and the mass distribution of the profiles (18), and the spraying nozzles (18) are arranged on nozzle strips (22) extending in the direction (16) of the profile (18), characterised in that the nozzle strips (22) comprise at least one longitudinally extending water channel (W', W'') and two longitudinally extending air channels (A', A''), wherein side channels (31, 33) branch off from the water channels (W', W'') to the spraying nozzles (28) and the air channels (A', A'') terminate in air gaps (39, 41) directed to the nozzle outlet openings (38).

2. Spraying plant according to claim 1, characterised in that the nozzle strips (22) are divided into modules (26) which can be supplied separately with cooling medium (W, A) or are constructed from such modules (26).

3. Spraying plant according to claim 1 or 2, characterised in that the nozzle strips (22) or modules (26) have a preferably extruded base body (52), in which the spraying nozzles (28) are inserted to be exchangeable.

4. Spraying plant according to claim 3, characterised in that the spraying nozzles (28) are held by a cover sheet (35) which is approximately U-shaped in cross-section.

5. Spraying plant according to one of claims 1 to 4, characterised in that covers (27, 29) forming air chambers (43, 45) and having an air gap (39, 41) directed to the nozzle outlet opening (38) are placed on the base body (52) and the air chambers (43, 45) are connected to the air channels (A', A'') via connecting channels (23, 25).

6. Spraying plant according to claims 4 and 5, characterised in that the cover sheet (35) between the air gaps (39, 41) and the nozzle outlet openings (38) has recesses (50) for partial lateral deflection of the air jet emerging from the air gaps (39, 41).

7. Spraying plant according to one of claims 1 to 6, characterised in that the modules (26) of a spraying plant (14) supply the same number of spraying nozzles (28), preferably three to ten.

8. Spraying plant according to one of claims 1 to 7, characterised in that nozzle strips (22), modules (26) and/or individual spraying nozzles (28) comprise means for adaptation to a profile (18) by parallel displacement and/or pivoting about at least one axis extending parallel to the direction of the profile (18).

9. Spraying plant according to one of claims 1 to 8, characterised in that means are provided for adjusting the quantity of cooling medium (W, A) flowing per unit of time through the longitudinally extending channels (A', A'', W', W'') of the nozzle strips (22) and/or the individual modules (26), including complete switch-off.

10. Process for determining the optimum adjustment of the spraying nozzles (28) in a spraying plant (14) according to one of claims 1 to 9, characterised in that a piece of a profile (18) to be manufactured heated to a temperature corresponding to the outlet temperature of the extruder (10) is cooled using different arrangements of the spraying nozzles (28) and/or modules (26) relative to the distance of the profile (18), the distribution and the direction (X) of the spraying nozzles (28) with equal air throughput and water throughput which can be adjusted to be different, the temperature path at several points (P1 - P24) is measured, the most favourable geometrical arrangement at the cooling medium throughput required is determined, checked several times and in the case of non-uniform temperature distribution a correction is ascertained at least once.

11. Process according to claim 10, characterised in that measurement of the surface temperature of the profile (18) is continued for 1 - 2 minutes, preferably at a frequency of about 20 measurements/second.

12. Process for operating a spraying plant according to one of claims 1 to 9, characterised in that the extruded profiles (18) are guided in the spraying plant at the surface temperature virtually corresponding to the solidus temperature, for aluminium and aluminium alloys at 550 to 580°C, and are cooled by a sprayed cooling medium (W, A) adapted to the shape and the mass distribution of the profiles (18) programme-controlled at a rate lying above the critical value (K) specific to the material.

13. Process according to claim 12, characterised in that profiles (18) emerging straight from the extruder (10) are sprayed approximately uniformly with the cooling medium (W, A).

14. Process according to claim 12, characterised in that curved and/or twisted profiles (18) emerging from the extruder (10) are cooled irregularly in relation to the cross-section in a manner specific to the profile.

15. Process according to one of claims 12 to 14, characterised in that the profile (18) is cooled at a passage rate of 5 to 50 metres/minute, preferably 10 to 30 metres/minute, with a preferred quantity of cooling medium of 10 to 50 Nl/minute of air and a quantity of water evaporating completely, in particular 20 to 40 Nl/minute of air and 0.2 to 1 l/minute of water, in each case per spraying nozzle (28).

16. Process according to one of claims 12 to 15, characterised in that the supply of cooling medium is continuously reduced, preferably for 30 to 60 seconds, until switch off when there is an interruption in extrusion.

17. Process according to one of claims 12 to 16, characterised in that the modules (26) in the direction of the profile (18) are switched on and off in stages at the start and at interruption of extrusion in accordance with the passage rate.

18. Process according to one of claims 12 to 17, characterised in that the spraying direction (X) and the spraying cone (24) of the cooling medium from the spraying nozzles (28) are controlled by process-controlled alteration of the air (A) emerging through two air gaps (39, 41) and directed to the nozzle outlet openings, as a result of which there is a better balanced flow of heat by means of a pendulum-type pivoting movement of the spraying cone (24) at an angle (β) vertical to the feed direction (16) of the profiles (18).

19. Process according to one of claims 12 to 18, characterised in that two spraying nozzles (28) supplied from different longitudinally extending water channels (W', W'') and arranged next to one another, are switched on individually or together, preferably at a throughput of 0.4, 0.8 or 1.2 l/minute of sprayed water.

## Revendications

1. Installation de pulvérisation (14) raccordée "en ligne" à une extrudeuse (10) pour le refroidissement sur tous les côtés de profilés métalliques (18), en particulier en aluminium ou en un alliage d'aluminium, comportant un fluide de refroidissement (W, A) sortant sous commande programmée hors de buses de pulvérisation (28) et dirigé vers les profilés (18), dans laquelle la distance (a, b, c, d), la répartition en section et la direction des buses de pulvérisation (28) peuvent être adaptées spécifiquement à la forme géométrique et à la répartition des masses des profilés (18), et dans laquelle les buses de pulvérisation (28) sont agencées sur des barrertes de buses (22) s étendant en direction (16) du profilé (18), caractérisée en ce que les barrettes de buses (22) comportent au moins un canal à eau (W', W'') s étendant longitudinalement et deux canaux à air (A', A'') s'étendant longitudinalement, des canaux de dérivation (31, 33) se ramifiant depuis les canaux à eau (W', W'') vers les buses de pulvérisation (28) et les canaux à air (A', A'') se terminant dans des fentes d'air (39, 41) dirigées vers les ouvertures de sortie de buse (38).

2. Installation de pulvérisation selon la revendication 1, caractérisée en ce que les barrettes de buses (22) sont subdivisées en modules (26) susceptibles d'être alimentés séparément en fluide de refroidissement (W, A), ou bien elles sont constituées par des tels modules (26).

3. Installation de pulvérisation selon l'une ou l'autre des revendications 1 et 2, caractérisée en ce que les barrettes de buses (22) ou les modules (26) présentent un corps de base (52), de préférence extrudé, dans lequel sont mises en place les buses de pulvérisation (28) de manière interchangeable.

4. Installation de pulvérisation selon la revendication 3, caractérisée en ce que les buses de pulvérisation (28) sont retenues par une tôle de couverture (35) ayant une section approximativement en forme de U.

5. Installation de pulvérisation selon l'une quelconque des revendications 1 à 4, caractérisée en ce que sur le corps de base (52) sont posés des recouvrements (27, 29) formant des chambres à air (43, 45) et présentant une fente d'air (39, 41) dirigée vers l'ouverture de sortie de buse (38), et en ce que les chambres à air (43, 45) sont reliées via des canaux de liaison (23, 25) aux canaux à air (A', A'').

6. Installation de pulvérisation selon les revendications 4 et 5, caractérisée en ce que la tôle de couverture (35) présente, entre les fentes d'air (39, 41) et les ouvertures de sortie de buse (38), des bosses (50) pour la déflexion latérale partielle du jet d'air sortant hors des fentes d'air (39, 41).

7. Installation de pulvérisation selon l'une quelconque des revendications 1 à 6, caractérisée en ce que les modules (26) d'une installation de pulvérisation (14) alimentent le même nombre de buses de pulvérisation (28), de préférence trois à dix.

8. Installation de pulvérisation selon l'une quelconque des revendications 1 à 7, caractérisée en ce que les barrettes de buses (22), les modules (26) et/ou les buses de pulvérisation individuelles (28) comportent des moyens pour l'adaptation à un profilé (18) par déplacement parallèle et/ou basculement autour d'au moins un axe s'étendant parallèlement à la direction du profilé (18).

9. Installation de pulvérisation selon l'une quelconque des revendications 1 à 8, caractérisée en ce qu'il est prévu des moyens pour régler la quantité débitée du fluide de refroidissement (W, A) par unité de temps à travers les canaux longitudinaux (A', A'', W', W'') des barrettes de buses (22) et/ou des modules individuels (26), y compris l'arrêt complet.

10. Procédé pour déterminer le réglage optimal des buses de pulvérisation (28) dans une installation de pulvérisation (14) selon l'une quelconque des revendications 1 à 9, caractérisé en ce qu'une partie d'un profilé à réaliser (18) qui est réchauffée à une température correspondante à la température de sortie de l'extrudeuse (10) est refroidie par des agencements de buses de pulvérisation (28) et/ou de modules (26) différents selon la distance du profilé (18), la répartition et la direction (X) des buses de pulvérisation (28) pour le même débit d'air et pour un débit d'eau variable et réglable, en ce que la courbe de température est mesurée à plusieurs emplacements (P1 à P24), en ce que l'agencement géométrique le plus favorable est déterminé pour le débit nécessaire de fluide de refroidissement, en ce qu'il est contrôlé plusieurs fois, et en ce qu'au moins une correction est déterminée lorsque la répartition de température n'est pas uniforme.

11. Procédé selon la revendication 10, caractérisé en ce que la mesure de la température superficielle du profilé (18) est poursuivie pendant 1 à 2 minutes, de préférence à une fréquence d'environ 20 mesures/secondes.

12. Procédé pour le fonctionnement d'une installation de pulvérisation selon l'une quelconque des revendications 1 à 9, caractérisé en ce que les profilés extrudés (18) sont menés dans l'installation de pulvérisation (14) à une température superficielle correspondant pratiquement à la température du solidus, de 550 à 580°C dans le cas d'aluminium et d'alliages en aluminium, et en ce qu'ils sont refroidis sous commande programmée par un fluide de refroidissement (W, A) pulvérisé de façon adaptée à la forme et à la répartition des masses des profilés (18), à une vitesse supérieure à la valeur critique (K) spécifique au matériau.

13. Procédé selon la revendication 12, caractérisé en ce que les profilés (18) sortant juste de l'extrudeuse (10) sont aspergés sur tout le pourtour de façon régulière avec le fluide de refroidissement (W, A).

14. Procédé selon la revendication 12, caractérisé en ce que les profilés (18) sortant de façon fléchie et/ou tordue hors de l'extudeuse (10) sont refroidis, quant à la section, de façon irrégulière et spécifique au profilé.

15. Procédé selon l'une quelconque des revendications 12 à 14, caractérisé en ce que le profité (18) est refroidi à une vitesse de passage de 5 à 50 m/min, de préférence de 10 à 30 m/min, avec une quantité de fluide de refroidissement préférée de 10 à 50 Nl/min d'air et une quantité d'eau entièrement évaporée, en particulier avec 20 à 40 Nl/min d'air et 0,2 à 1 l/min d'eau, respectivement, par buse de pulvérisation (28).

16. Procédé selon l'une quelconque des revendications 12 à 15, caractérisé en ce que lors d'une interruption de l'extrusion, l'amenée de fluide de refroidissement est réduite en continu, de préférence pendant 30 à 60 secondes, jusqu'à l'arrêt.

17. Procédé selon l'une quelconque des revendications 12 à 16, caractérisé en ce que les modules (26) sont mis en marche ou arrêtés par étapes en direction du profilé (18) au début et lors d'une interruption de l'extrusion, en correspondance à la vitesse de passage.

18. Procédé selon l'une quelconque des revendications 12 à 17, caractérisé en ce que la direction de pulvérisation (X) et le cône de pulvérisation (24) du fluide de refroidissement des buses de pulvérisation (28) sont commandés par la modification contrôlée de l'air (A) sortant par deux fentes d'air (39, 41) et dirigé vers les ouvertures de sortie de buse, grâce à quoi il en résulte une meilleure compensation du flux calorifique au moyen d'un mouvement de basculement en va-et-vient du cône de pulvérisation (24) à un angle (β) perpendiculaire à la direction d'avance (16) des profilés (18).

19. Procédé selon l'une quelconque des revendications 12 à 18, caractérisé en ce que deux buses de pulvérisation (28) agencées l'une à côté de l'autre et alimentées par différents canaux longitudinaux à eau (W', W'') sont mises en service individuellement ou en commun, de préférence avec un débit d'eau pulvérisée de 0,4 ; 0,8 ou 1,2 l/min.
